# EUROPÄISCHE PATENTANMELDUNG

(11) **EP 4 484 371 A2**
(43) Veröffentlichungstag der Anmeldung: **01.01.2025**
(21) Anmeldenummer: 24175173.4
(22) Anmeldetag: 10.05.2024
(51) Int. Cl.: C01B 32/05, C01B 32/30, C01B 32/354

(54) **HOCHLEITFÄHIGE KOHLENSTOFF-AEROGEL-KOMPOSITE**

(30) Priorität: 10.05.2023 DE 102023112315
(71) Anmelder: Deutsches Zentrum für Luft- und Raumfahrt e.V., 53227 Bonn (DE)
(72) Erfinder: Milow, Barbara, Hürth (DE); Kröner, Jessica, Königswinter (DE); Schwan, Marina, Leverkusen (DE)
(74) Vertreter: dompatent von Kreisler Selting Werner - Partnerschaft von Patent- und Rechtsanwälten mbB

(57) **Zusammenfassung**

Die vorliegende Erfindung betrifft ein leitfähiges Kompositmaterial, welches ein Kohlenstoff-Aerogel und recycelter Aktivkohle (recovered Carbon Black, rcB, Rückgewinnungsruß), frei von Asche, silikatischen Verbindungen und Zinkkomponenten ist, umfasst.

## Beschreibung

Die vorliegende Erfindung betrifft ein leitfähiges Kompositmaterial, welches ein Kohlenstoff-Aerogel und recovered Carbon Black (nachfolgend auch als Rückgewinnungsruß bezeichnet) umfasst.

Kohlenstoff-Aerogele (CA) sind dreidimensionale, offenporige, amorphe Materialien, die durch Karbonisierung von organischen Aerogelen hergestellt werden (beispielsweise Resorcin-Formaldehyd, Resorcin-Formaldehyd-Melamin, Biopolymere oder Materialien auf Biomassebasis). Einzigartige Eigenschaften von Kohlenstoff-Aerogelen wie gut kontrollierte Porosität, große spezifische Oberfläche, elektrische Leitfähigkeit und geringe umhüllende Dichte machen sie zu vielversprechenden Materialien für Anwendungen in der Katalyse, Superkondensatoren oder als Elektrodenmaterial in Batterien.

Die elektrische Leitfähigkeit von amorphen Kohlenstoffmaterialien hängt mit ihrer elektronischen Struktur, der Größe graphitischer Strukturen oder graphitischem Charakter und Heteroatomen zusammen. Die umhüllende Dichte und die elektrische Leitfähigkeit korrelieren gut zusammen. Kohlenstoff-Aerogele mit hoher Dichte und dicht gepackten Partikeln zeigen eine hohe elektrische Leitfähigkeit. Mesoporöse Kohlenstoff-aerogele, bei denen der Abstand zwischen den Partikeln größer ist, zeigten eine geringere Leitfähigkeit. Für Kohlenstoff-Aerogele mit Dichten im Bereich von 60 bis 650 kg/m³ wurde ein Skalierungsexponent von 1,5 ± 0,1 ermittelt. Dies liegt daran, dass in einem dichten Netz mehr Transportwege vorhanden sind, als in einem mit weniger Verknüpfungen. Die Karbonisierungstemperatur hat einen großen Einfluss auf die elektrische Leitfähigkeit von Kohlenstoff-Aerogelen. Mit steigender Temperatur zwischen 800 °C und 2500 °C nimmt die elektrische Leitfähigkeit zu. Die Zugabe von elektrisch leitfähigen Additiven kann die Leitfähigkeit deutlich erhöhen. Graphit ist aufgrund seiner geringen Kosten ein verbreitetes, kommerziell erhältliches Material (Beispiele: Kugelgraphit, Blähgraphit). Der größte Nachteil besteht darin, dass die Graphitherstellung ein energie- und zeitintensiver Prozess ist. Sowohl die Naturgraphitverarbeitung als auch die Produktion von dem synthetischen Graphit verursachen CO₂-Emissionen, aber auch die Freisetzung von NOₓ und SOₓ Verbindungen, sowie Partikelemissionen. Andere Additive wie Graphen, Kohlenstoffröhrchen oder reduziertes Graphen Oxid werden aufgrund der hohen Produktionskosten seltener verwendet. Ein wiedergewonnener Ruß (engl. Recovered Carbon Black r-CB) hergestellt aus Altreifen stellt eine Alternative dar.

WO 2020/020810 A1 beschreibt einen Füllstoff, der recycelte Aktivkohle (recovered carbon black; rCB; Rückgewinnungsruß) mit einer Iodzahl gemessen nach ASTM D-1510-17 im Bereich von 9 g/kg bis 160 g/kg enthält. Hier wird ein Komposit aus Kautschuk und dem vorgenannten Ruß beschrieben. Als Komposit wird insbesondere ein Reifen, beispielsweise Fahrzeug-Reifen beschrieben.

Sebastiäo M. R. Costa, David Fowler, Germano A. Carreira, Inês Portugal, and Carlos M. Silva (Production and Upgrading of Recovered Carbon Black from the Pyrolysis of End-of-Life Tires) Materials 2022, 15, 2030. https://doi.org/10.3390/ma15062030 beschreiben, dass das wachsende Bewusstsein für die Abhängigkeit von fossilen Brennstoffen, die Verwertung von Abfällen und die Treibhausgasemissionen in den letzten Jahrzehnten zur Entwicklung neuer Lösungen für zahlreiche Märkte geführt hat. Die Reifenindustrie bildet hier keine Ausnahme, denn bei einer weltweiten Produktion von mehr als 1,5 Milliarden Reifen pro Jahr wirft ökologische Bedenken hinsichtlich des Recyclings oder der Entsorgung dieser Reifen am Ende ihrer Lebensdauer auf. Die Pyrolyse ermöglicht die Rückgewinnung sowohl von Energie als auch von Material aus Altreifen, wobei wertvolle gasförmige, flüssige und feste Fraktionen gewonnen werden, Letztere, bekannt als Rückgewinnungsruß (rCB), wurde in den letzten Jahren intensiv erforscht, um seine Qualität für Marktanwendungen sicherzustellen. Diese Studien haben gezeigt, dass die Qualität von rCB von der Zusammensetzung des Ausgangsmaterials und den Pyrolysebedingungen wie Reaktortyp, Temperaturbereich, Heizrate und Verweilzeit abhängt. Jüngste Entwicklungen von Aktivierungs- und Entmineralisierungstechniken zielen auf die Herstellung von rCB mit spezifischen chemischen, physikalischen und morphologischen Eigenschaften für bestimmte Anwendungen ab. Die Automobilindustrie, die den größten Rußverbraucher darstellt, hat sich spezifische Ziele gesetzt, um recycelte Materialien (wie rCB) nach den Prinzipien der Nachhaltigkeit und der Kreislaufwirtschaft zu verwenden. Diese Übersicht fasst die Pyrolyse von Altreifen zur Herstellung von Synthesegas, Öl und rCB zusammen, wobei der Schwerpunkt auf den Prozessbedingungen sowie Produktausbeute und -zusammensetzung. Eine weitere Analyse der Eigenschaften des Feststoffes, einschließlich ihres Einflusses auf die Verwendung von rCB als Ersatz für kommerzielles CB in der Reifenindustrie, Reinigungs- und Modifikationsnachbehandlungsprozesse für die rCB-Veredelung werden ebenfalls untersucht.

Somi Doja, Lava Kumar Pillari und Lukas Bichler, Renewable and Sustainable Energy Reviews 155 (2022) 111860; Processing and activation of tire-derived char: A review; beschreiben unter anderem die Entmineralisierung von Ruß mit Säure vor oder nach der Aktivierung. Weiterhin ist ein entsprechendes Verfahren aus Costa, S. M. R., et al. (2022). "Production and Upgrading of Recovered Carbon Black from the Pyrolysis of End-of-Life Tires." Materials 15(6): 2030 und Yuan, C.-S., et al. (2004). "Preparation of Sulfurized Powdered Activated Carbon from Waste Tires Using an Innovative Compositive Impregnation Process." Journal of the Air & Waste Management Association 54(7): 862-870 bekannt.

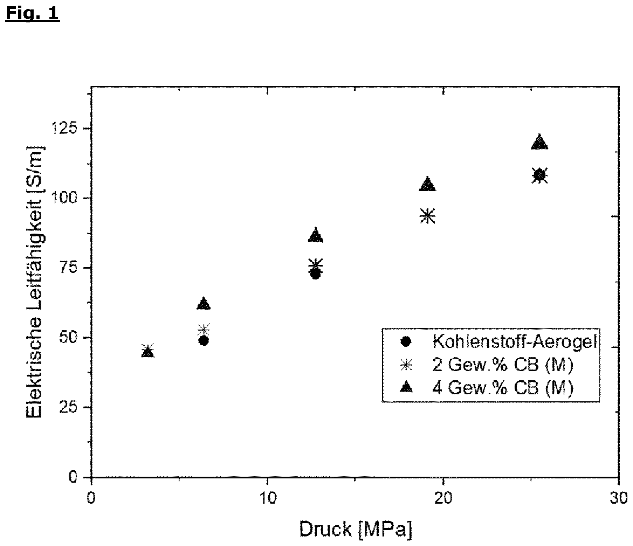

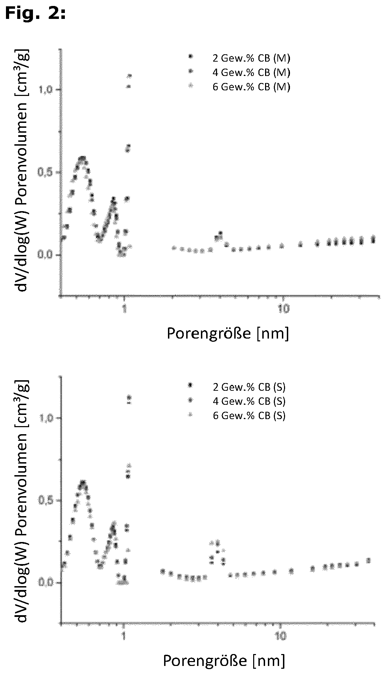

Recycelte Aktivkohle (rcB, Rückgewinnungsruß) im Sinne der vorliegenden Erfindung ist beispielsweise erhältlich nach einem Verfahren, das in WO 2013/095145A1 und dem hier referierten Stand der Technik beschrieben ist. Die recycelte Aktivkohle (Rückgewinnungsruß) setzt sich aus etwa 99,4 Gew.-% Kohlenstoff; 0,1 Gew.-% Silizium und 0,5 Gew.-% Schwefel. Die elektrische Leitfähigkeit des Rußes ist in der Fig. 1 dargestellt. Die spezifische Oberfläche bestimmt mittels Stickstoff-Physisorption beträgt 67 m²/g, das Mesoporenvolumen liegt bei 0,4 cm³/g. Die Porengrößenverteilung (BJH Methode) ist in der Fig. 2 dargestellt. Die mittlere Porengröße liegt bei 50-70 nm.

Marina Schwan, Somi Doja, DLR-Magazin, 2020, 164, S. 30-31 beschreibt allgemein die Verwendung von Reifenabfällen, insbesondere Ruß in Form von recycelter Aktivkohle für Anodenmaterial von LIB. Durch einen thermischen Prozess (Pyrolyse) werden unter Ausschluss von Sauerstoff Altreifen aufbereitet. Hierbei werden die organischen Verbindungen des Altreifens zunächst aufgespalten. Die im Prozess entstehenden Gase werden kondensiert, wodurch sogenanntes TPO (Tire Pyrolysis Oil) entsteht. Das erzeugte Öl wird beispielsweise zur Energieerzeugung für industrielle Prozesse genutzt oder in Raffinerien weiterverarbeitet. Am Ende des Prozesses verbleibt ein kohlenstoffhaltiger Wertstoff - das sogenannte Roh-recovered Carbon Black (siehe auch WO 2013/095145A1). Dieser Wertstoff enthält neben "Carbon Black" allerdings auch bis zu 25% Asche, welche aus bei der Reifenherstellung genutzten Additiven besteht. Dies sind im Wesentlichen silikatische Verbindungen und Zinkkomponenten.

Kohlenstoff-Aerogele sind aufgrund ihrer großen Oberfläche, des Porenvolumens und einstellbarer Porosität und Porengröße hervorragende Kandidaten für Anodenmaterialien in Lithium-Ionen Batterie (LIB). Sie zeigen eine hohe Leistung im Vergleich zum Graphit. Kohlenstoff-Aerogele können aus unterschiedlichen Ausgangsmaterialien wie Lignin, Cellulose, Chitin, Chitosan und Prekursoren wie Resorcin-Formaldehyd-, Melamin-Formaldehyd- und anderen organischen Aerogelen hergestellt werden.

Aufgabe der vorliegenden Erfindung ist es, die Eigenschaften von Kohlenstoff-Aerogel zu optimieren, insbesondere dessen elektrische Leitfähigkeit, zu verbessern.

Zur Lösung der Aufgabe stellt die vorliegende Erfindung einen Komposit bereit, dessen Material ein Kohlenstoff-Aerogel umfasst.

Diese Aufgabe wird in einer ersten Ausführungsform gelöst durch ein Kompositmaterial umfassend ein Kohlenstoff-Aerogel-Komposit aus Aerogel und recycelter Aktivkohle (Rückgewinnungsruß), das dadurch gekennzeichnet, dass die recycelte Aktivkohle (Rückgewinnungsruß) im Wesentlichen frei von Asche, silikatischen Verbindungen und Zinkkomponenten ist und das Komposit eine Leitfähigkeit, gemessen mit der Vier-Punkt-Methode (siehe Wikipedia, Stichwort "Vier-Punkt-Methode, Abruf 03.05.2023) von wenigstens 46 S/m gemessen bei einem Druck von 3 MPa hat.

Eine niedrigere elektrische Leitfähigkeit würde zur deutlich schlechteren Batterie-Performance führen. Durch die Zugabe von recycelter Aktivkohle (Rückgewinnungsruß) zu einem Kohlenstoffaerogel wird die elektrische Leitfähigkeit von Kompositmaterial erhöht. Wie in Fig. 1 dargestellt, führt ein höherer Anteil von recycelter Aktivkohle (Rückgewinnungsruß) zur Steigerung der Leitfähigkeit.

Die Erfindung betrifft somit insbesondere ein leitfähiges Kompositmaterial, welches ein Kohlenstoff-Aerogel und recycelte Aktivkohle (rcB, Rückgewinnungsruß) umfasst, insbesondere daraus besteht.

Die vorgenannte Aufgabe wurde insbesondere gelöst, in dem ein Kohlenstoff-Aerogel mit dem aufbereiteten Ruß aus Altreifen kombiniert wurde. Hier ist von besonderer Bedeutung, dass der Ruß (Rückgewinnungsruß)im Wesentlichen keine Asche, silikatische Verbindungen oder Zinkkomponenten enthält. Diese reduzieren die Leitfähigkeit eines entsprechenden Aerogel Ruß-Kompositmaterials. Die erfindungsgemäße Kombination führt zur deutlichen Verbesserung der spezifischen Kapazität.

Die Entfernung von Asche, silikatischen Verbindungen und Zinkverbindungen erfolgt durch an sich bekannte Verfahren, beispielsweise durch Behandlung des Rußes mit Schwefelsäure.

Besonders bevorzugt im Sinne der vorliegenden Erfindung ist ein Komposit, das dadurch gekennzeichnet ist, dass es 1 bis zu 50 Gew.-%, insbesondere 2 bis 6 Gew.-% der recyclierten Aktivkohle (Rückgewinnungsruß) bezogen auf die Menge an Aerogel enthält. Bei zu niedrigem Anteil ist die recyclierte Aktivkohle (Rückgewinnungsruß) nicht homogen im Aerogel verteilt; die Vorteile des Materials sind nicht sichtbar. Höhere Anteile (>6 Gew.-%) wurden nicht untersucht; vermutlich wird Aktivkohle (Rückgewinnungsruß) mit niedriger spezifischer Oberfläche die gesamte Oberfläche des Komposits herabsetzen und somit die Kapazität womöglich negativ beeinflussen.

Eine weitere Ausführungsform der Erfindung besteht in einem Verfahren zur Herstellung des oben definierten Komposits, das dadurch gekennzeichnet ist, dass man
(a) recyclierte Aktivkohle (Rückgewinnungsruß), die im Wesentlichen frei von Asche, silikatischen Verbindungen und Zinkkomponenten ist, während der Synthese eines Aerogels der Sol-Gel-Lösung zugibt oder
(b) recyclierte Aktivkohle (Rückgewinnungsruß) mit einem Aerogel vermischt und
(c) eine Karbonisierung nach an sich bekannten Verfahren durchführt.

Besonders bevorzugt im Sinne der vorliegenden Erfindung wird das Verfahren dadurch realisiert, man ein Aerogel organischen Ursprungs oder einem Biopolymer-basierten Ausgangsmaterial einsetzt. Biomasse, insbesondere aus Kaffeeschalen, Bananenfasern, Reis- oder Weizenstroh als Ausgangsmaterial zur Herstellung der Aerogele.

### Elektrische Leitfähigkeit des Kohlenstoff-Aerogel-Komposits:

Die hier beschriebenen Kohlenstoff-Aerogel-Komposite besitzen eine hohe elektrische Leitfähigkeit (Fig. 1). Die Kombination des Kohlenstoff-Aerogels mit dem Additiv r-CB (Rückgewinnungsruß) führt zu einer höheren elektrischen Leitfähigkeit. Diese steigt mit dem Anteil des Additivs an. In Fig. 1 wird die elektrische Leitfähigkeit eines Kohlenstoff-Aerogel-Komposits mit 2 und 4 Gew.-% recovered carbon black (Rückgewinnungsruß) dargestellt.

In der Tabelle 1 sind die Eigenschaften von reinem Aerogel (CA) und von Kompositen (CA + rCB, Rückgewinnungsruß) zusammengefasst. Die in der *Synthese* hergestellten Komposite werden als *S-Serie* und in der *Mühle* gemischten *M-Serie* bezeichnet. Es zeigt sich, dass durch Zusatz von Rückgewinnungsruß als Additiv die strukturellen Eigenschaften eines Aerogels nicht wesentlich verändert wurden.

**Tabelle 1: Strukturelle Eigenschaften von reinem Aerogel (CA) und Kompositen**

| | **Spezifische Oberfläche A_{BET} [m²/g]** | **Microporevolumen V_{micro} [cm³/g]** | **Mesoporenvolumen Vₘₑₛₒ [cm³/g]** |
|---|---|---|---|
| CA | 634 | 0,22 | 0,09 |
| CA + rCB 2 Gew.-% S-Serie | 582 | 0,19 | 0,19 |
| CA + rCB 4 Gew.-% S-Serie | 614 | 0,20 | 0,21 |
| CA + rCB 6 Gew.-% S-Serie | 543 | 0,18 | 0,19 |
| CA + rCB 2 Gew.-% M-Series | 522 | 0,17 | 0,08 |
| CA + rCB 4 Gew.-% M-Series | 504 | 0,17 | 0,13 |
| CA + rCB 6 Gew.-% M-Series | 493 | 0,16 | 0,14 |

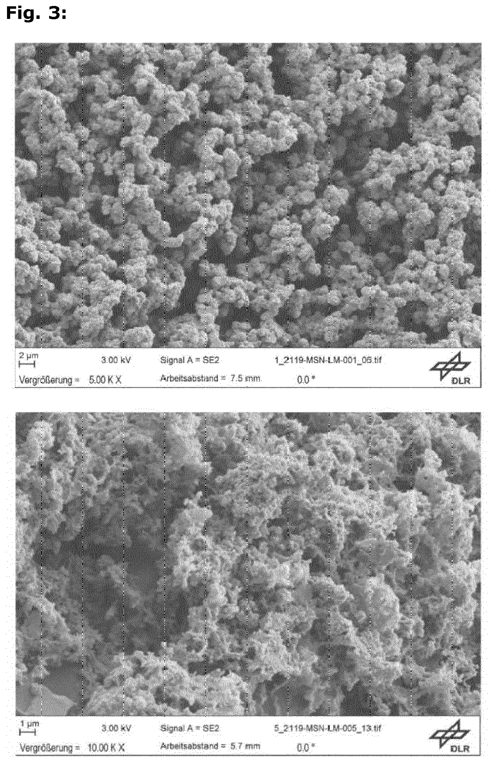

Fig. 2 zeigt die Porengrößenverteilungen der Komposite (M- und S-Serien). Fig. 3 zeigt (oben) die Mikrostruktur von reinem Kohlenstoff-Aerogel und (unten) die Mikrostruktur von einem CA-r-CB Komposit mit 4 Gew.-% der S-Serie
Im nachfolgenden Ausführungsbeispiel wird die vorliegende Erfindung in nicht limitierender Weise erläutert.

### Ausführungsbeispiel:

### Herstellung von Kohlenstoff-Aerogel-Kompositen

### • Ansetzen der Lösung und Gelation

Zunächst wurden 68,6 g destilliertes Wasser (W) in einem Becher eingewogen. Danach wurden 13,7 g Melamin (M) und 51,4 g Formaldehyd (F) (37Gew.-%-Lösung mit 10% Methanol stabilisiert) dazugegeben. Die Lösung wurde unter Rühren auf 50°C aufgeheizt. Bei 40°C wurden 34,3 g Natriumhydroxid (0,5 M) hinzugefügt und die Lösung wird solange gerührt, bis sich das Melamin vollständig gelöst hatte. Dann wurden 10,3 g Salzsäure (37%-Lösung) und 24,0 g Resorcin (R) hinzugefügt und die Lösung weiter gerührt. Bei Einsetzen der Gelation wurde die Lösung in dicht verschließbare Behälter (Glas oder PP) überführt.

### • Alterung und Trocknung

Die dicht verschlossenen Behälter wurden im Ofen bei 60°C für 24 h gealtert. Anschließend wurden die Behälter geöffnet und im Ofen bei 60°C für 24 h getrocknet.

Nach der Trocknung der Resorcin-Melamin-Formaldehyd (RMF)-Aerogele erhielt man ein orangebraunes Aerogel

### • Herstellung der Komposite

Die Komposite wurden sowohl direkt während der Herstellung der Lösung, als auch nachträglich durch Mahlen erzeugt.
(a) Herstellung in der Lösung: Die RMF-Aerogele wurden wie beschrieben synthetisiert. 2 Gew.-%, 4 Gew.-% und 6 Gew.-% des Additivs recovered Carbon Black (Rückgewinnungsruß, im Wesentlichen frei von Asche, silikatischen Verbindungen und Zinkkomponenten) wurden zusammen mit Resorcin der Lösung beigefügt.
(b) Herstellung durch Mahlen: Die getrockneten RMF-Aerogele wurden mit 2 Gew.-%, 4 Gew.-% und 6 Gew.-% des Additivs recovered carbon black (rCB, Rückgewinnungsruß, im Wesentlichen frei von Asche, silikatischen Verbindungen und Zinkkomponenten ) vermischt und in einer Schwingmühle bei 30 Hz für 30 sec gemahlen.

### • Karbonisierung

Die Resorcin-Melamin-Formaldehyd-Aerogel-Komposite wurden in Stickstoffatmosphäre bei 800°C, 1 Stunde lang karbonisiert. Sie könnten bei Bedarf physikalisch oder chemisch aktiviert werden.

### • Zerkleinerung

Die Kohlenstoff-Aerogel-Komposite wurden in einer handelsüblichen Schwingmühle 30 Sekunden lang bei 20 Hz gemahlen.

### • Waschen

Die pulverisierten Kohlenstoff-Aerogel-Komposite wurden in warmem, destilliertem Wasser gelöst und anschließend abfiltriert. Dieser Prozess wurde so lange wiederholt, bis die Leitfähigkeit des Wassers unter 20 pS/cm lag.

### Bestimmung der elektrischen Leitfähigkeit

Die elektrische Leitfähigkeit der Komposite wurde mit dem Widerstandsmesssystem Loresta GX (Mitsubishi Chemical Europe) untersucht. Dieses System basiert auf der 4-Pin-Messmethode des Oberflächenwiderstandes in Anlehnung an IS K 7194:1994 (Testing Method For Resistivity Of Conductive Plastics With A Four-Point Probe Array). Der Strom fließt dabei durch die äußeren Stifte 1 und 4, der zu einer messbaren Potentialdifferenz zwischen den beiden inneren Stiften führt. Diese Potentialdifferenz ist abhängig vom Oberflächenwiderstand des Probenmaterials, der wiederum auf den Volumenwiderstand und damit die elektrische Leitfähigkeit umgerechnet wird. Diese Berechnungen sind im Messsystem Loresta GX implementiert. Die Messungen wurden im Druckbereich 3 bis 28 MPa durchgeführt.

## Patentansprüche

1. Kohlenstoff-Aerogel-Komposit aus Aerogel und recycelter Aktivkohle (Rückgewinnungsruß), **dadurch gekennzeichnet, dass** die Aktivkohle (Rückgewinnungsruß) frei von Asche, silikatischen Verbindungen und Zinkkomponenten ist und das Komposit eine Leitfähigkeit, gemessen mit der Vier-Punkt-Methode von wenigstens 46 S/m gemessen bei einem Druck von 3 MPa hat.

2. Komposit nach Anspruch 1, **dadurch gekennzeichnet, dass** es 1 bis zu 50 Gew.-% der Aktivkohle (Rückgewinnungsruß) bezogen auf die Menge an Aerogel enthält.

3. Verfahren zur Herstellung eines Komposits nach Anspruch 1, **dadurch gekennzeichnet, dass** man
(a) die Aktivkohle (Rückgewinnungsruß) während der Synthese des Aerogels der Sol-Gel-Lösung zugibt oder
(b) die Aktivkohle (Rückgewinnungsruß) mit dem Aerogel vermischt und
(c) die Karbonisierung nach an sich bekannten Verfahren durchführt.

4. Verfahren nach Anspruch 3, **dadurch gekennzeichnet, dass** man ein Aerogel organischen Ursprungs oder ein Biopolymer-basiertes Ausgangsmaterial einsetzt.

5. Verfahren nach Anspruch 3 oder 4, **dadurch gekennzeichnet, dass** man Biomasse, insbesondere Kaffeeschalen, Bananenfasern, Reis- oder Weizenstroh als Ausgangsmaterial zur Herstellung der Aerogele einsetzt.

6. Verfahren nach Anspruch 3 oder 4, **dadurch gekennzeichnet, dass** man Lignin, Cellulose, Chitin und/oder Chitosan als Ausgangsmaterial zur Herstellung der Aerogele einsetzt.
